# FASCICULE DE BREVET EUROPEEN

(11) **EP 1 789 267 B1**
(45) Date de publication et mention de la délivrance du brevet: **16.09.2009**
(21) Numéro de dépôt: 05786070.2
(22) Date de dépôt: 04.07.2005
(51) Int. Cl.: B60C 23/06

(54) **PROCÉDÉ DE DÉTERMINATION D'UNE CONDITION DE ROULAGE PAR ANALYSE HARMONIQUE SPATIALE DE LA VITESSE**
VERFAHREN ZUR BESTIMMUNG EINER LAUFBEDINGUNG DURCH HARMONISCHER RAUMFREQUENZANALYSE DER DREHZAHL
METHOD FOR DETERMINING A RUNNING CONDITION BY SPATIAL HARMONIC ANALYSIS OF SPEED

(30) Priorité: 06.07.2004 FR 0451461
(43) Date de publication de la demande: 30.05.2007
(73) Titulaire: S.N.R. ROULEMENTS, 74000 Annecy (FR)
(72) Inventeur: DURET, Christophe, F-74600 Quintal (FR)
(74) Mandataire: Broydé, Marc
(86) Numéro de dépôt international: PCT/FR2005/001710
(87) Numéro de publication internationale: WO 2006/013278

(56) Documents cités:
- WO-A-00/01545

## Description

L'invention concerne un procédé de détermination d'une condition de roulage d'un organe tournant sur une surface.

Elle s'applique typiquement à la détermination d'au moins une condition de roulage d'un pneu de véhicule automobile sur le sol. En particulier, les conditions de roulage déterminées peuvent être utilisées pour connaître des états ou des paramètres de la liaison à l'interface entre le pneu et le sol, ceux-ci étant notamment destinés à être implémentés dans les systèmes de contrôle de la dynamique du véhicule comme par exemple l'ABS ou l'ESP.

Pour déterminer une condition de roulage, on a proposé d'analyser l'évolution de la vitesse de rotation du pneu, en particulier en comparant les variations de la vitesse de rotation respective des deux roues d'un même essieu. Toutefois cette stratégie de détermination n'est pas satisfaisante notamment du fait de son caractère relatif, mais également du fait du nombre important de paramètres influant sur la vitesse relative des roues d'un même essieu (par exemple la prise d'un virage). Par conséquent, la fiabilité et la précision de la condition de roulage déterminée ne sont, en particulier, pas compatibles avec une application dans un système de sécurité dynamique du véhicule.

Pour améliorer cette stratégie de détermination, on a proposé d'analyser temporellement la vitesse de rotation du pneu de sorte à identifier une loi de détermination d'une condition de roulage. Mais cette stratégie ne permet pas de résoudre les problèmes mentionnés ci-dessus, en particulier du fait de la grande dépendance de la loi vis-à-vis des variations de la vitesse de rotation.

On connaît par ailleurs du document WO-A-00/01545 un procédé de détection d'une condition de roulage à plat d'un pneumatique d'un véhicule. Selon ce procédé, la vitesse angulaire de rotation de la roue est analysée par transformée de Fourier spatiale de sorte à exploiter les variations d'énergie au voisinage des harmoniques de la rotation. Cette stratégie, si elle permet de s'affranchir des contraintes inhérentes à l'analyse temporelle, ne permet pas d'obtenir une fiabilité satisfaisante dans la détermination de la condition de roulage à plat.

En effet, comme mis en évidence par la demanderesse lors de la conception de la présente invention, et comme expliqué dans la suite de la description, les variations d'énergie dans les bandes du spectre qui sont centrées autour des harmoniques dépendent d'un nombre important de paramètres. En particulier, parmi ces paramètres, certains sont indépendants de la condition de roulage, tels que les caractéristiques de la chaîne de mesure ou celles du pneu, ce qui altère considérablement le caractère univoque de la relation entre les variations d'énergie et l'évolution de la condition de roulage. Par conséquent, lors de la mise en oeuvre du procédé selon le document WO-A-00/01545, une variation d'énergie, même significative, n'implique pas forcément l'évolution de la condition de roulage, ce qui altère de façon importante la fiabilité de la détermination de la condition de roulage.

L'invention vise notamment à résoudre les problèmes mentionnés ci-dessus en proposant un procédé de détermination d'une condition de roulage d'un organe tournant sur une surface, ladite détermination étant rendue indépendante de la vitesse de rotation de l'organe ainsi que de l'évolution de paramètres parasites, de sorte à pouvoir déterminer la condition de roulage de façon précise et fiable.

A cet effet, et selon un premier aspect, l'invention propose un procédé de détermination d'une condition de roulage d'un organe tournant sur une surface, ledit procédé comprenant la procédure initiale prévoyant d'effectuer une analyse fréquentielle spatiale de la vitesse de rotation de l'organe de sorte à identifier au moins une fenêtre fréquentielle n'incluant pas une harmonique du tour de l'organe dans laquelle une loi de détermination de la condition de roulage est établie, et une procédure itérative de détermination de la condition de roulage comprenant les étapes prévoyant de :
- mesurer la vitesse de rotation V dudit organe ;
- échantillonner spatialement ladite vitesse avec une période d'échantillonnage spatial constante Δd ;
- analyser le signal échantillonné dans la fenêtre fréquentielle identifiée de sorte, en fonction de la loi établie, à déterminer la condition de roulage.

Selon un deuxième aspect, l'invention propose l'application d'un tel procédé de détermination, à la détermination d'au moins une condition de roulage d'un pneu de véhicule automobile sur le sol.

D'autres objets et avantages de l'invention apparaîtront au cours de la description qui suit, faite en référence aux dessins annexés, dans lesquels :
- la figure 1a représente la courbe d'évolution de la vitesse de rotation V d'une roue en fonction du temps T, respectivement dans un cas idéal où la courbe est sinusoïdale de fréquence 1 Hz autour de la vitesse moyenne (courbe en trait pointillé) et dans un cas où trois défauts de même amplitude et apparaissant respectivement une, deux et trois fois par tour ont été introduits (courbe en trait plein) ;
- les figures 1b et 1c sont des spectres de transformée de Fourier respectivement temporelle et spatiale des courbes de la figure 1a montrant l'évolution de l'amplitude A en fonction de la fréquence F ;
- les figures 2a à 2c sont des spectres de transformée de Fourier spatiale montrant l'évolution de la raie correspondant au premier harmonique de la rotation d'une roue, en fonction de respectivement trois amplitudes d'un défaut apparaissant une fois par tour de roue ;
- les figures 3a à 3c sont des spectres de transformée de Fourier spatiale d'un signal de vitesse de rotation d'une roue, respectivement à trois échelles différentes, dans une condition de roulage « sol normal » ;
- les figures 4a à 4c sont des spectres analogues à ceux des figures 3a à 3c, dans une condition de roulage « sol à gros grains ».

L'invention concerne un procédé de détermination d'une condition de roulage d'un organe tournant sur une surface, en particulier d'une roue de véhicule automobile sur le sol.

Dans de nombreuses applications, en particulier dans les systèmes de contrôle de la dynamique du véhicule comme par exemple l'ABS ou l'ESP, il est utile de déterminer des conditions de roulage pour notamment adapter l'intervention de ces systèmes en fonction desdites conditions.

En particulier, les conditions de roulage peuvent concerner l'état de la roue et/ou du pneu, l'état de la chaussée ou l'interaction pneu/sol. En outre, les conditions de roulage déterminées suivant l'invention peuvent être de type quantitative, c'est-à-dire sous la forme d'un état en général binaire, ou de type qualitative, c'est-à-dire sous la forme d'un paramètre.

A titre d'exemple, on peut citer les conditions de roulage suivantes :
- la pression du pneu ;
- l'adhérence de la chaussée, appelée parfois également coefficient de friction ;
- les efforts ou les moments appliqués à l'interface pneu/sol ;
- l'angle du volant de direction ;
- l'angle de lacet ;
- l'angle de dérive du pneu par rapport au plan de la roue ;
- le glissement des roues motrices par rapport aux roues non motrices ;
- la différence de vitesse de deux roues du même train ;
- l'excentration de l'ensemble roulement, codeur, roue, pneu ;
- les niveaux de vibrations ou d'oscillations du moteur du véhicule et de sa transmission ;
- l'état de la chaussée (plaque de glace, flaque d'eau, flaque d'huile, poussières, état de surface, ...) ;
- la crevaison du pneu ;
- l'état d'usure du pneu ;
- le mauvais montage du pneu ou de la roue ;
- le réglage du train (carrossage).

En fonction des besoins spécifiques à l'application considérée, l'invention propose une stratégie de détermination indirecte d'au moins une condition de roulage qui prévoit une procédure initiale d'identification et de modélisation de l'influence de la condition de roulage sur la vitesse de rotation de la roue puis une procédure itérative de détermination de la condition de roulage.

La procédure initiale prévoit une analyse harmonique spatiale de la vitesse de rotation de la roue. Selon une réalisation, cette analyse est réalisée par :
- la mesure de la vitesse de rotation V de la roue ;
- l'échantillonnage spatial de ladite vitesse avec une période d'échantillonnage spatial constante Δd ;
- le calcul de la transformée de Fourier spatiale du signal échantillonné de sorte à obtenir le spectre de la vitesse de rotation de l'organe.

Ainsi, l'analyse harmonique spatiale permet d'extraire les fréquences spatiales individuelles du signal de vitesse et de leur affecter respectivement une amplitude.

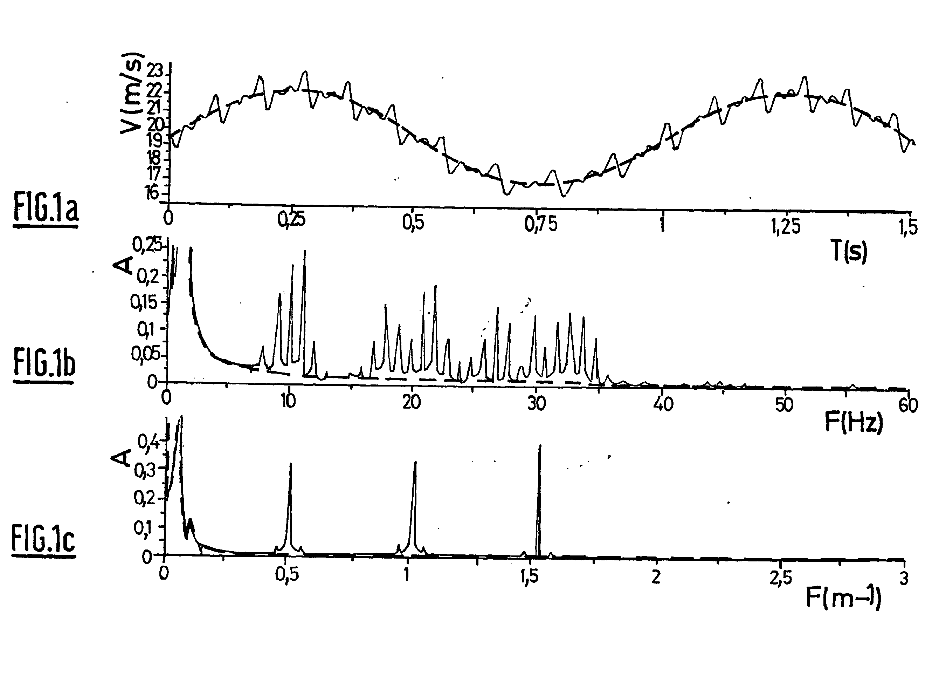

Sur la figure 1a est représentée en trait pointillé la courbe d'évolution d'une vitesse V qui est sinusoïdale de fréquence 1 Hz autour de la vitesse moyenne et, en trait plein, la même courbe dans laquelle trois défauts de même amplitude et apparaissant respectivement une, deux et trois fois par tour ont été introduits.

La figure 1b montre le spectre de transformée de Fourier temporelle des courbes de la figure 1a. Sur ces spectres, on constate que l'introduction des défauts entraîne l'apparition dans tout le spectre de multiples raies d'amplitude non négligeable. Par conséquent, ce spectre est difficilement interprétable pour établir une loi de détermination d'une condition de roulage, en particulier du fait de la difficulté à décorréler les évolutions des raies du spectre qui sont dues aux défauts de celles qui sont induites par la modification de la condition de roulage. En outre, l'analyse temporelle est limitée puisque nombre de phénomènes vont apparaître à une fréquence multiple de la fréquence de rotation de la roue et, si cette dernière évolue dans le temps, ceci conduit à un élargissement, une multiplication et/ou un recouvrement des raies caractéristiques. Par ailleurs, dans le cadre de l'analyse temporelle, la résolution en fréquence du spectre obtenu est nécessairement grossière puisque le nombre de points du signal de vitesse acquis doit être faible pour limiter les effets des variations de vitesse du véhicule lors de l'acquisition.

L'invention propose donc une analyse harmonique spatiale telle que représentée sur la figure 1c qui représente les spectres de transformée de Fourier spatiale des courbes de la figure 1a. On constate que les raies de ces spectres sont fines et localisées, ce qui les rend facilement interprétables. En effet, la première raie (harmonique 1) correspond au défaut apparaissant une fois par tour de roue (la circonférence de la roue étant prise égale à 2 m, la fréquence spatiale de cette raie est de 0,5 m⁻¹), la deuxième raie (harmonique 2) correspond au défaut apparaissant deux fois par tour de roue, etc....

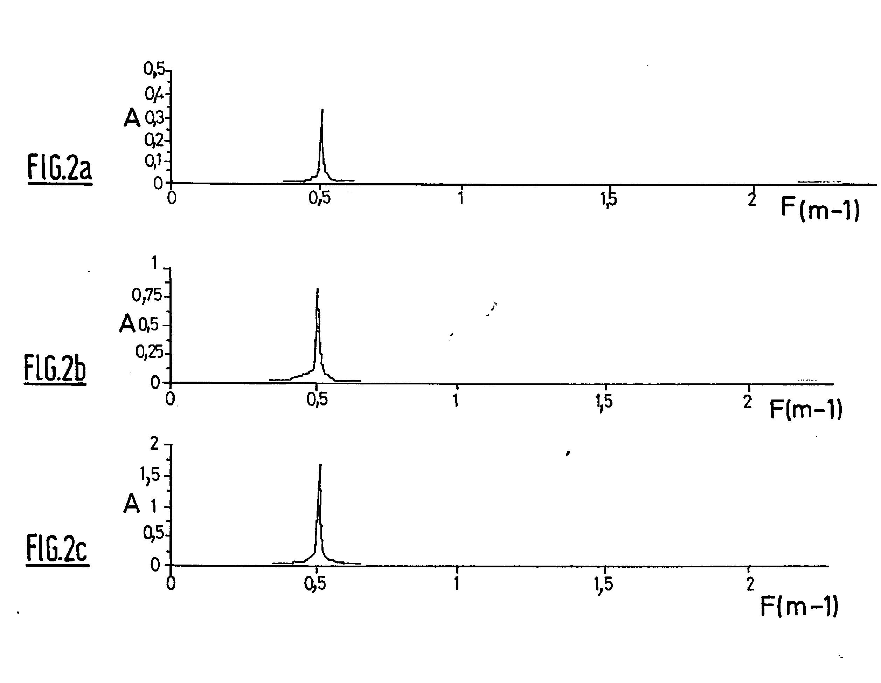

Toutefois l'amplitude des raies harmoniques est proportionnelle à l'amplitude du défaut correspondant. En effet, les figures 2 montre l'amplitude de l'harmonique 1 en fonction de trois amplitudes du défaut apparaissant une fois par tour de roue. Par conséquent, la demanderesse a montré que l'évolution de l'amplitude des raies harmoniques ne peut pas être corrélée de façon fiable à la modification de la condition de roulage puisque l'apparition ou l'évolution de défauts périodiques - notamment dans la chaîne de mesure comprenant : le moteur, la transmission, le pneu, le montage de la roue, le roulement, le codeur et le capteur - parasite l'évolution de l'amplitude des raies harmoniques.

L'invention propose donc, lors de la procédure initiale, d'identifier au moins une fenêtre fréquentielle n'incluant pas une harmonique de tour de roue dans laquelle une loi de détermination de la condition de roulage peut être établie. Ainsi, l'évolution du spectre dans cette fenêtre est indépendante des défauts et peut donc être corrélée de façon simple à la modification de la condition de roulage.

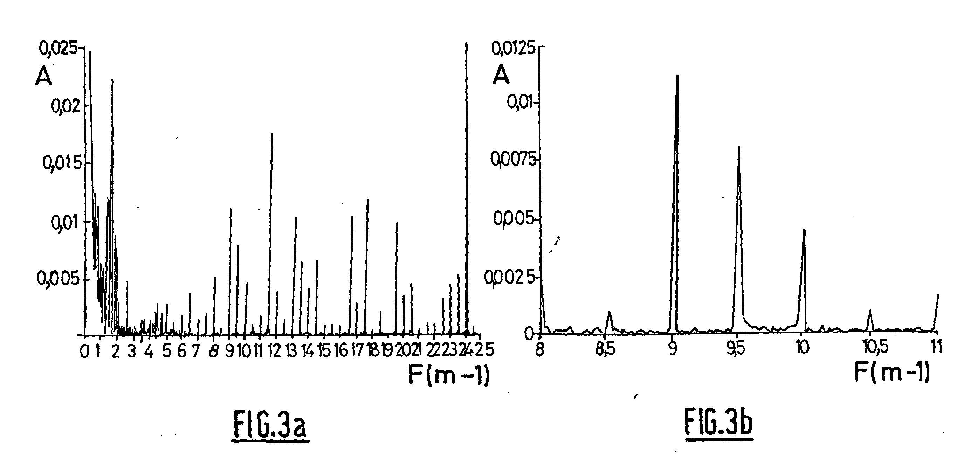

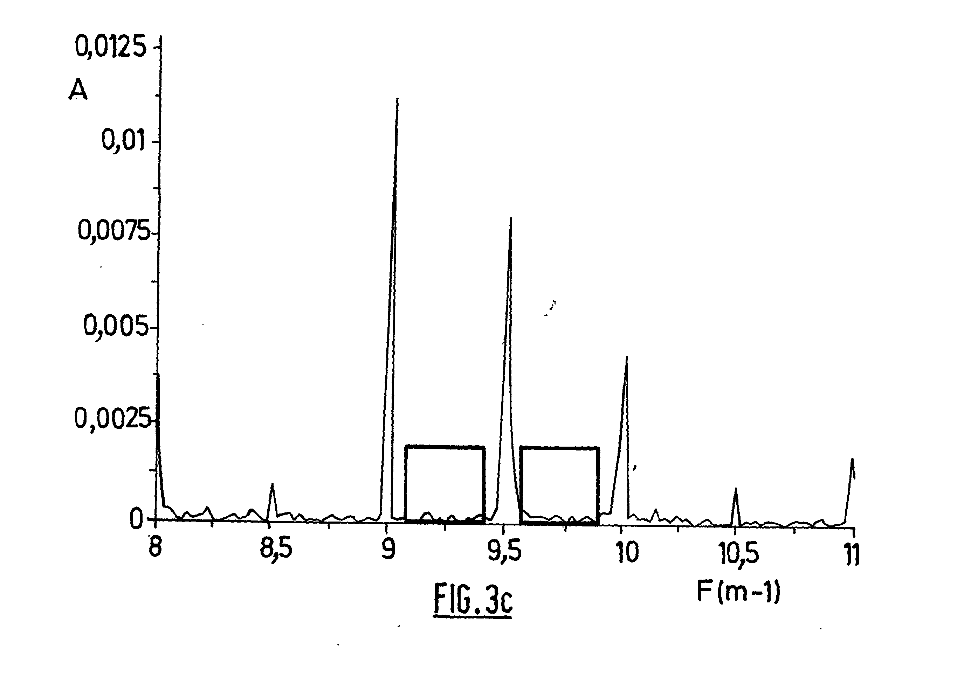

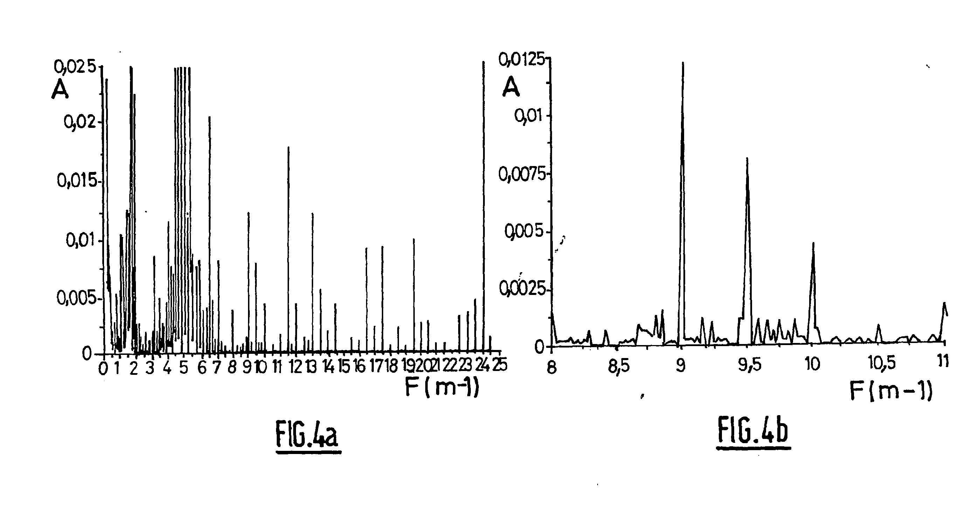

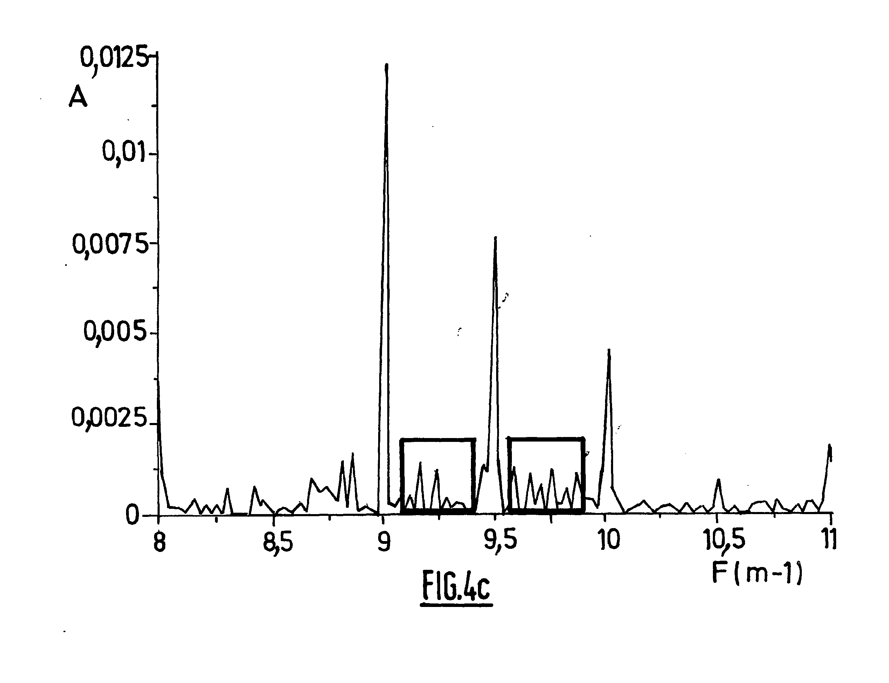

On décrit ci-dessous, en relation avec les figures 3 et 4 la réalisation de la procédure initiale dans le cas où la condition de roulage est un état de surface de la chaussée qui peut prendre deux valeurs : « sol normal » ou « sol à gros grains », en fonction de la taille des agglomérats du sol sur lequel la roue tourne.

Selon cette réalisation, l'analyse fréquentielle spatiale de la vitesse de rotation de la roue comprend une transformée de Fourier spatiale du signal de vitesse lorsque la roue tourne sur un sol de type « normal » (figures 3) et une transformée de Fourier spatiale du signal de vitesse lorsque la roue tourne sur un sol de type « à gros grains » (figures 4). Par exemple, ces deux types de signaux de vitesse peuvent être acquis pendant une phase d'essai sur des sols de type connu, en mesurant la vitesse de rotation de la roue et en échantillonnant spatialement ladite vitesse avec une période d'échantillonnage spatial constante Δd.

Ensuite, en comparant les deux spectres des figures 3 et 4, on peut identifier au moins une fenêtre fréquentielle n'incluant pas une harmonique du tour de roue dans laquelle des différences significatives sont observables. Ainsi, comme montré ci-dessus, on peut corréler de façon fiable ces différences au changement d'état dans la condition de roulage. Dans l'exemple donné, on identifie deux fenêtres, respectivement entre 9,1 et 9,4 m⁻¹ et entre 9,6 et 9,9 m⁻¹ (dans l'hypothèse où la circonférence de la roue est égale à 2 m, c'est-à-dire que les harmoniques sont disposés tous les 0,5 m⁻¹). Dans ces fenêtres, on constate que l'énergie totale du signal (obtenue par intégration ou moyenne de l'amplitude du spectre) est supérieure dans l'état « sol à gros grains » que dans l'état « sol normal ». Par conséquent, on peut établir une loi de détermination, dans le cas présent une valeur seuil de l'énergie du signal dans chacune des fenêtre, au delà de laquelle l'état « sol à gros grains » est déterminé de façon fiable.

En variante, et pour encore améliorer la fiabilité dans la détermination de la condition de roulage, on peut prévoir que la loi de détermination soit établie en fonction d'au moins une valeur issue de chacune des fenêtres. Dans l'exemple considéré, la valeur seuil de l'énergie mentionnée ci-dessus peut être égale à une combinaison des valeurs seuils établies dans chacune des fenêtres.

Dans une autre réalisation, on peut prévoir d'établir une loi de détermination comprenant une loi de comportement permettant de déterminer au moins une condition de roulage. Ainsi, dans l'exemple mentionné ci-dessus, la loi de comportement pourrait être l'évolution de l'adhérence de la chaussée en fonction de l'énergie du spectre dans la ou les fenêtre(s) identifiée(s).

Dans un autre exemple, on peut identifier au moins une fenêtre fréquentielle dans laquelle l'énergie du signal varie en fonction de la pression du pneu. Il est ainsi possible d'établir une loi de comportement : pression du pneu en fonction de l'énergie dans la ou les fenêtres, de sorte à déterminer la pression du pneu par mise en oeuvre du procédé selon l'invention

Selon une autre réalisation, on peut choisir d'identifier au moins une fenêtre n'incluant pas une harmonique du tour de la roue et au moins une fenêtre incluant une harmonique du tour de l'organe. En particulier, cette réalisation permet de déterminer des conditions de roulage qui sont périodiques, c'est-à-dire qui apparaissent principalement au niveau des harmoniques. Toutefois, en prévoyant la combinaison des fenêtres fréquentielles mentionnées ci-dessus, l'invention permet, au niveau des harmoniques, de décorréler les contributions respectives des défauts périodiques et de l'évolution de la condition de roulage, en utilisant une loi de détermination qui prend également en compte au moins une valeur issue d'une fenêtre n'incluant pas une harmonique. Ainsi, il est par exemple possible de déterminer de façon fiable des conditions telles que l'excentration du codeur par rapport au capteur, l'ovalité de l'ensemble pneu - roue ou le mauvais état d'équilibrage de la roue, qui vont induire une variation d'amplitude de l'harmonique 1 puisqu'elles apparaissent une fois par tour de roue.

Comme mentionné ci-dessus, la procédure initiale peut être mise en oeuvre en mesurant et en échantillonnant la vitesse de la roue lors d'essais de roulage dans des conditions connues, de sorte à établir les lois de détermination souhaitées. Ensuite, la ou les lois de détermination peuvent être enregistrée(s) dans un calculateur propre ou hôte, de sorte à être utilisée(s) ultérieurement.

A cet effet, après établissement de la loi de détermination, le procédé prévoit une procédure itérative de détermination de la condition de roulage prévoyant les étapes de :
- mesurer la vitesse de rotation V dudit organe ;
- échantillonner spatialement ladite vitesse avec une période d'échantillonnage spatial constante Δd ;
- analyser le signal échantillonné dans la fenêtre fréquentielle identifiée de sorte, en fonction de la loi établie, à déterminer la condition de roulage.

Dans l'exemple décrit en relation avec les figures 3 et 4, l'énergie du signal échantillonné dans les deux fenêtres fréquentielles va donc être comparée de façon itérative à la ou aux valeur(s) seuil(s), de sorte à déterminer la condition de roulage « sol normal » ou « sol à gros grains ».

Selon une réalisation, lors de la procédure de détermination comme lors de la procédure initiale, la mesure et l'échantillonnage de la vitesse est réalisée au moyen :
- d'un codeur, solidaire en rotation de l'organe, ledit codeur comprenant une piste multipolaire ; et
- d'un capteur fixe comprenant au moins deux éléments sensibles qui sont disposés en regard et à distance de lecture de la piste multipolaire, ledit capteur étant agencé pour délivrer le signal de vitesse échantillonné spatialement.

Dans un exemple particulier, le codeur est formé d'une pièce magnétique multipolaire sur laquelle est aimantée une pluralité de paires de pôles Nord et Sud équiréparties avec une largeur angulaire constante. Par exemple, le codeur peut être solidarisé de façon connue à la bague tournante du roulement sur lequel la roue est montée.

En disposant à distance d'entrefer de ce codeur, au moins deux éléments sensibles, par exemple formés d'une sonde à effet Hall ou d'une magnétorésistance, le capteur peut délivrer de façon connue un signal de vitesse de la roue par rapport au châssis, ledit signal étant échantillonné spatialement avec une période constante Δd qui est fonction de la largeur angulaire des pôles magnétiques. En particulier, le document FR-A-2 792 380 décrit un roulement comprenant un codeur et un capteur qui sont agencés pour délivrer un signal de vitesse adapté pour la mise en oeuvre du procédé selon l'invention.

Selon une réalisation, le signal de vitesse échantillonné est interpolé de sorte à augmenter sa résolution spatiale, une telle interpolation étant, par exemple, décrite dans le document FR-2 754 063. Selon cette réalisation, la zone de fréquence observable est agrandie, ce qui permet d'identifier la ou les fenêtre(s) fréquentielle(s) parmi un nombre plus important de possibilités. Dans un exemple particulier, lorsque le codeur comprend 48 paires de pôles et que le facteur d'interpolation est de 32, la fréquence maximale atteignable est de 1550 m⁻¹ (dans le cas où la circonférence de la roue est égale à 2 m). Ainsi, un phénomène de période spatiale supérieure à 0,6 mm qui perturberait la vitesse de la roue serait susceptible d'être détecté et donc, par mise en oeuvre du procédé selon l'invention, la survenance de ce phénomène pourrait être déterminée en tant que condition de roulage.

On décrit ci-dessous quatre modes de réalisation de l'analyse du signal échantillonné lors de la procédure itérative. Dans ces réalisations, le signal de vitesse peut être échantillonné avec un nombre de points correspondant à 10 tours de roue.

Selon la première réalisation, cette analyse comprend :
- le calcul de la transformée de Fourier spatiale du signal échantillonné de sorte à obtenir le spectre de la vitesse de rotation de l'organe ;
- dans la fenêtre fréquentielle identifiée, l'application de la loi de détermination en fonction d'au moins une valeur caractéristique du spectre, notamment l'énergie du spectre.

Par conséquent, selon cette réalisation, l'analyse du signal lors de détermination est de même nature que celle réalisée lors de la procédure itérative.

Selon la deuxième réalisation, l'analyse comprend :
- le calcul de la transformée de Fourier spatiale du signal échantillonné de sorte à obtenir le spectre de la vitesse de rotation de l'organe ;
- le filtrage du spectre, dans la fenêtre identifiée, par élimination des fréquences qui ne sont pas intéressantes ;
- l'application de la loi de détermination en fonction d'au moins une valeur caractéristique du signal filtré, ladite valeur étant notamment représentative de l'énergie du signal filtré.

En variante, préalablement à l'application de la loi de détermination, la fenêtre identifiée est déplacée vers les basses fréquences puis le signal spatial est reconstitué à une fréquence d'échantillonnage plus faible (décimation) par des techniques connues de l'homme du métier, afin de limiter la quantité de calculs à réaliser ultérieurement.

Dans les deux modes de réalisation suivants, on prévoit d'utiliser un filtre numérique dont la bande passante correspond à une fenêtre fréquentielle identifiée lors de la procédure initiale.

Selon la troisième réalisation, l'analyse comprend :
- le filtrage numérique, dans la fenêtre identifiée, du signal échantillonné ;
- l'application de la loi de détermination en fonction d'au moins une valeur caractéristique du signal filtré, ladite valeur étant notamment représentative de l'énergie du signal filtré.

Dans cette réalisation, on filtre de façon préalable le signal échantillonné de sorte à éviter la réalisation de façon itérative du calcul de la transformée de Fourier spatiale.

Selon la quatrième réalisation, l'analyse comprend :
- le filtrage numérique, dans la fenêtre identifiée, du signal échantillonné ;
- le calcul de la transformée de Fourier spatiale du signal filtré ;
- l'application de la loi de détermination en fonction d'au moins une valeur caractéristique du spectre, ladite valeur étant notamment représentative de l'énergie du spectre.

En variante, préalablement au calcul, la fenêtre identifiée est déplacée vers les basses fréquences puis le signal spatial est reconstitué à une fréquence d'échantillonnage plus faible (décimation), afin de limiter la quantité de calculs à réaliser ultérieurement.

## Revendications

1. Procédé de détermination d'une condition de roulage d'un organe tournant sur une surface, ledit procédé comprenant la procédure initiale prévoyant d'effectuer une analyse fréquentielle spatiale de la vitesse de rotation de l'organe de sorte à identifier au moins une fenêtre fréquentielle n'incluant pas une harmonique du tour de l'organe dans laquelle une loi de détermination de la condition de roulage est établie, et une procédure itérative de détermination de la condition de roulage comprenant les étapes prévoyant de :
- mesurer la vitesse de rotation V dudit organe ;
- échantillonner spatialement ladite vitesse avec une période d'échantillonnage spatial constante Δd ;
- analyser le signal échantillonné dans la fenêtre fréquentielle identifiée de sorte, en fonction de la loi établie, à déterminer la condition de roulage.

2. Procédé selon la revendication 1, **caractérisé en ce que** l'analyse harmonique spatiale est réalisée par :
- mesure de la vitesse de rotation V dudit organe ;
- échantillonnage spatial de ladite vitesse avec une période d'échantillonnage spatial constante Δd ;
- calcul de la transformée de Fourier spatiale du signal échantillonné de sorte à obtenir le spectre de la vitesse de rotation de l'organe.

3. Procédé selon la revendication 1 ou 2, **caractérisé en ce qu'**au moins deux fenêtres fréquentielles sont identifiées, la loi de détermination étant établie en fonction d'au moins une valeur issue de chacune des fenêtres.

4. Procédé selon la revendication 3, **caractérisé en ce qu'**au moins une fenêtre fréquentielle inclue une harmonique du tour de l'organe.

5. Procédé selon l'une quelconque des revendications 1 à 4, **caractérisé en ce que** la loi de détermination comprend une valeur seuil permettant de déterminer au moins un état de roulage.

6. Procédé selon l'une quelconque des revendications 1 à 5, **caractérisé en ce que** la loi de détermination comprend une loi de comportement permettant de déterminer au moins un paramètre de roulage.

7. Procédé selon l'une quelconque des revendications 1 à 6, **caractérisé en ce que** la loi de détermination est fonction de l'énergie du spectre dans la fenêtre fréquentielle identifiée.

8. Procédé selon l'une quelconque des revendications 1 à 7, **caractérisé en ce que** la mesure et l'échantillonnage de la vitesse est réalisé au moyen :
- d'un codeur, solidaire en rotation de l'organe, ledit codeur comprenant une piste multipolaire ; et
- d'un capteur fixe comprenant au moins deux éléments sensibles qui sont disposés en regard et à distance de lecture de la piste multipolaire, ledit capteur étant agencé pour délivrer le signal de vitesse échantillonné spatialement.

9. Procédé selon la revendication 8, **caractérisé en ce que** le signal de vitesse échantillonné est interpolé de sorte à augmenter sa résolution spatiale.

10. Procédé selon l'une quelconque des revendications 1 à 9, **caractérisé en ce que** l'analyse du signal échantillonné comprend :
- le calcul de la transformée de Fourier spatiale du signal échantillonné de sorte à obtenir le spectre de la vitesse de rotation de l'organe ;
- dans la fenêtre fréquentielle identifiée, l'application de la loi de détermination en fonction d'au moins une valeur caractéristique du spectre.

11. Procédé selon l'une quelconque des revendications 1 à 9, **caractérisé en ce que** l'analyse du signal échantillonné comprend ;
- le calcul de la transformée de Fourier spatiale du signal échantillonné de sorte à obtenir le spectre de la vitesse de rotation de l'organe ;
- le filtrage numérique, dans la fenêtre identifiée, du spectre ;
- l'application de la loi de détermination en fonction d'au moins une valeur caractéristique du signal filtré.

12. Procédé selon la revendication 11, **caractérisé en ce que** préalablement à l'application de la loi de détermination, la fenêtre identifiée est déplacée vers les basses fréquences.

13. Procédé selon l'une quelconque des revendications 1 à 9, **caractérisé en ce que** l'analyse du signal échantillonné comprend ;
- le filtrage numérique, dans la fenêtre identifiée, du signal échantillonné ;
- l'application de la loi de détermination en fonction d'au moins une valeur caractéristique du signal filtré.

14. Procédé selon l'une quelconque des revendications 1 à 9, **caractérisé en ce que** l'analyse du signal échantillonné comprend ;
- le filtrage numérique, dans la fenêtre identifiée, du signal échantillonné ;
- le calcul de la transformée de Fourier spatiale du signal filtré ;
- l'application de la loi de détermination en fonction d'au moins une valeur caractéristique du spectre.

15. Procédé selon la revendication 14, **caractérisé en ce que** préalablement au calcul de la transformée de Fourier, la fenêtre identifiée est déplacée vers les basses fréquences.

16. Application d'un procédé de détermination selon l'une quelconque des revendications 1 à 15, à la détermination d'au moins une condition de roulage d'un pneu de véhicule automobile sur le sol.

## Claims

1. A method for determining the running condition of a member rotating on a surface, said method including the initial procedure providing a spatial frequency analysis of the rotation speed of the member, so as to identify at least one frequency window not including an harmonic component of the revolution of the member, wherein a law on the determination of the running condition is established, and an iterative procedure for determining the running condition including the following steps:
- measuring the rotation speed V of said member;
- spatially sampling said speed with a constant special sampling period Δd;
- analysing the sample signal in the identified frequency window, so that the running condition can be determined according to the established law.

2. A method according to claim 1, **characterised in that** the spatial harmonic analysis is carried out by:
- measuring speed V of said member;
- spatially sampling said speed with a constant spatial sampling period Δd;
- calculating the spatial Fourier transform of the sampled signal as to obtain a spectrum of the rotation speed of the member.

3. A method according to claim 1 or 2, **characterised in that** at least two frequency windows are identified, the determination law being established according to at least one value from each of the windows.

4. A method according to claim 3, **characterised in that** at least one frequency window includes a harmonic component of the revolution of the member.

5. A method according to any one of claims 1 to 4,
**characterised in that** the determination law includes a threshold value making it possible to determine at least one running condition.

6. A method according to any one of claims 1 to 5,
**characterised in that** the determination law includes a behavior law making it possible to determine at least one running parameter.

7. A method according to any one of claim 1 to 6,
**characterised in that** the determination law depends on the energy of the spectrum in the identified frequency window.

8. A method according to any one of claims 1 to 7, **characterised in that** the measurement and sampling of the speed is carried out using:
- an encoder which is integral in rotation with the member, said encoder including a multipolar track; and
- a fixed sensor including at least two sensitive elements which are positioned opposite and at a reading distance from the multipolar track, said sensor being so arranged as to deliver the spatially sampled speed signal.

9. A method according to claim 8, **characterised in that** the sampled speed signal is interpolated so as to increase its spatial resolution.

10. A method according to any one of claims 1 to 9, **characterised in** the sampled signal analysis includes:
- calculating the spatial Fourier transform of the sampled signal so as to obtain the spectrum of the rotation speed of the member;
- in the identified frequency window, the application of the determination law according to at least one spectrum characteristic value.

11. A method according to any one of claims 1 to 9, **characterised in that** the analysis of the sampled signal includes:
- calculating the spatial Fourier transform of the sampled signal so as to obtain the spectrum of the rotation speed of the member;
- the digital filtering in the identified window of the spectrum;
- application of the determination law according to at least one characteristic value of the filtered signal.

12. A method according to claim 11, **characterised in that** prior to the application of the determination law, the identified window is shifted to low frequencies.

13. A method according to any one of claims 1 to 9, **characterised in that** the analysis of the sample signal includes:
- the digital filtering in the identified window of the sampled signal;
- the application of the determination law according to at least one characteristic value of the filtered signal.

14. A method according to any one of claims 1 to 9, **characterised in that** the analysis of the sampled signal includes;
- the digital filtering in the identified window of the sampled signal;
- calculating the spatial Fourier transform of the filtered signal;
- the application of the determination law according to at least one characteristic value on the spectrum.

15. A method according to claim 14, **characterised in that** prior to calculating the Fourier transform, the identified window is shifted to the lower frequencies.

16. Application of a determination method according to any one of claims 1 to 15, to the determination of at least one running condition of the tire of a motor vehicle on the ground.

## Patentansprüche

1. Verfahren zur Bestimmung einer Rollbedingung eines sich auf einer Fläche drehenden Organs, wobei das genannte Verfahren das ursprüngliche Verfahren umfasst, das die Durchführung einer räumlichen Frequenzanalyse der Rotationsgeschwindigkeit des Organs derart vorsieht, dass wenigstens ein Frequenzfenster identifiziert wird, das keine harmonische Schwingung der Drehung des Organs beinhaltet, in der ein Gesetz zur Bestimmung der Rollbedingung festgelegt ist, und ein iteratives Verfahren zur Bestimmung der Rollbedingung, das die Stufen umfasst, die Folgendes vorsehen:
- Messung der Rotationsgeschwindigkeit V des genannten Organs;
- Räumliche Bemusterung der genannten Geschwindigkeit mit einer konstanten räumlichen Bemusterungsperiode Δd;
- Analyse des bemusterten Signals in dem identifizierten Frequenzfenster derart, dass in Abhängigkeit von dem festgelegten Gesetz die Rollbedingung bestimmt wird.

2. Verfahren gemäß Anspruch 1, **dadurch gekennzeichnet, dass** die räumliche Analyse der harmonischen Schwingung durch Folgendes realisiert wird:
- Messung der Rotationsgeschwindigkeit V des genannten Organs;
- Räumliche Bemusterung der genannten Geschwindigkeit mit einer konstanten räumlichen Bemusterungsperiode Δd;
- Berechnung der räumlichen Fourier-Transformation des bemusterten Signals derart, dass das Spektrum der Rotationsgeschwindigkeit des Organs erhalten wird.

3. Verfahren gemäß Anspruch 1 oder 2, **dadurch gekennzeichnet, dass** wenigstens zwei Frequenzfenster identifiziert werden, wobei das Gesetz zur Bestimmung in Abhängigkeit von wenigstens einem Wert erstellt wird, der aus jedem der Fenster stammt .

4. Verfahren gemäß Anspruch 3, **dadurch gekennzeichnet, dass** wenigstens ein Frequenzfenster eine harmonische Schwingung der Drehung des Organs beinhaltet.

5. Verfahren gemäß Anspruch 1 bis 4, **dadurch gekennzeichnet, dass** das Gesetz zur Bestimmung einen Schwellenwert umfasst, der die Bestimmung wenigstens eines Rollszustandes erlaubt.

6. Verfahren gemäß Anspruch 1 bis 5, **dadurch gekennzeichnet, dass** das Gesetz zur Bestimmung ein Verhaltensgesetz umfasst, dass die Bestimmung wenigstens eines Rollparameters erlaubt.

7. Verfahren gemäß Anspruch 1 bis 6, **dadurch gekennzeichnet, dass** das Gesetz zur Bestimmung von der Energie des Spektrums in dem identifizierten Frequenzfenster abhängt.

8. Verfahren gemäß Anspruch 1 bis 7, **dadurch gekennzeichnet, dass** die Messung und die Bemusterung der Geschwindigkeit realisiert werden mittels:
- eines in Rotation mit dem Organ fest verbundenen Codierers, wobei der genannte Codierer eine multipolare Spur umfasst; und
- eines festen Sensors, der wenigstens zwei sensible Elemente umfasst, die gegenüber und in Lesedistanz von der multipolaren Spur angeordnet sind, wobei der genannte Sensor angeordnet ist, um das räumlich bemusterte Geschwindigkeitssignal auszugeben.

9. Verfahren gemäß Anspruch 8, **dadurch gekennzeichnet, dass** das bemusterte Geschwindigkeitssignal derart interpoliert ist, dass es seine räumliche Auflösung erhöht.

10. Verfahren gemäß Anspruch 1 bis 9, **dadurch gekennzeichnet, dass** die Analyse des bemusterten Signals Folgendes umfasst:
- die Berechnung der räumlichen Fourier-Transformation des bemusterten Signals derart, dass das Spektrum der Rotationsgeschwindigkeit des Organs erhalten wird;
- in dem identifizierten Frequenzfenster die Anwendung des Gesetzes zur Bestimmung in Abhängigkeit von wenigstens einem charakteristischen Wert des Spektrums.

11. Verfahren gemäß Anspruch 1 bis 9, **dadurch gekennzeichnet, dass** die Analyse des bemusterten Signals Folgendes umfasst:
- die Berechnung der räumlichen Fourier-Transformation des bemusterten Signals derart, dass das Spektrum der Rotationsgeschwindigkeit des Organs erhalten wird;
- in dem identifizierten Fenster die digitale Filterung des Spektrums;
- die Anwendung des Gesetzes zur Bestimmung in Abhängigkeit von wenigstens einem charakteristischen Wert des gefilterten Signals.

12. Verfahren gemäß Anspruch 11, **dadurch gekennzeichnet, dass** das identifizierte Fenster vor der Anwendung des Gesetzes zur Bestimmung zu den niedrigen Frequenzen verschoben wird.

13. Verfahren gemäß Anspruch 1 bis 9, **dadurch gekennzeichnet, dass** die Analyse des bemusterten Signals Folgendes umfasst:
- in dem identifizierten Fenster die digitale Filterung des bemusterten Signals;
- die Anwendung des Gesetzes zur Bestimmung in Abhängigkeit von wenigstens einem charakteristischen Wert des gefilterten Signals.

14. Verfahren gemäß Anspruch 1 bis 9, **dadurch gekennzeichnet, dass** die Analyse des bemusterten Signals Folgendes umfasst:
- in dem identifizierten Fenster die digitale Filterung des bemusterten Signals;
- die Berechnung der räumlichen Fourier-Transformation des gefilterten Signals;
- die Anwendung des Gesetzes zur Bestimmung in Abhängigkeit von wenigstens einem charakteristischen Wert des Spektrums.

15. Verfahren gemäß Anspruch 14, **dadurch gekennzeichnet, dass** vor der Berechnung der Fourier-Transformation das identifizierte Fenster zu den niedrigen Frequenzen verschoben wird.

16. Anwendung eines Verfahrens zur Bestimmung gemäß Anspruch 1 bis 15, auf die Bestimmung wenigstens einer Rollbedingung eines Kraftfahrzeugreifens auf dem Boden.
